# EUROPÄISCHE PATENTSCHRIFT

(11) **EP 2 861 052 B1**
(45) Veröffentlichungstag und Bekanntmachung des Hinweises auf die Patenterteilung: **13.09.2017**
(21) Anmeldenummer: 13728973.2
(22) Anmeldetag: 11.06.2013
(51) Int. Cl.: A01D 41/14, A01D 45/02

(54) **ERNTEVORSATZ FÜR EINE ERNTEMASCHINE**
HARVESTING ATTACHMENT FOR A HARVESTER
ACCESSOIRE DE MOISSON POUR UNE MOISSONNEUSE

(30) Priorität: 15.06.2012 DE 102012011912
(43) Veröffentlichungstag der Anmeldung: 22.04.2015
(73) Patentinhaber: BISO Schrattenecker GmbH, 4974 Ort Im Innkreis (AT); CNH Industrial Belgium nv, 8210 Zedelgem (BE)
(72) Erfinder: SCHRATTENECKER, Franz, A-4773 Eggerding (AT)
(74) Vertreter: Zinnecker, Armin
(86) Internationale Anmeldenummer: PCT/EP2013/001710
(87) Internationale Veröffentlichungsnummer: WO 2013/185908

(56) Entgegenhaltungen:
- EP-A1- 1 820 385
- EP-A1- 2 266 382
- DE-A1-102010 052 816

## Beschreibung

Die Erfindung betrifft einen Erntevorsatz für eine Erntemaschine mit einem Rahmen, der eine Rückwand und eine Bodenwand umfaßt.

Ein derartiger Erntevorsatz ist aus der DE 10 2010 052 816 A1 bekannt. Der Erntevorsatz kann ferner eine oder zwei Seitenwände an seinen Enden aufweisen. Der Rahmen des Erntevorsatzes kann zur Aufnahme verschiedener Erntewerkzeuge dienen, insbesondere zur Aufnahme eines Schneidwerks. Der Erntevorsatz kann an einer Erntemaschine, insbesondere an einem Mähdrescher, befestigt sein. Er wird während des Erntebetriebs in einer Vorwärtsrichtung mittels einer landwirtschaftlichen Erntemaschine über ein Feld bewegt und dient zur Aufnahme bestimmter Erntefrüchte. Beispielsweise umfaßt der Erntevorsatz ein Schneidwerk, eine Haspel, einen Schneidbalken, Halmteiler und/oder Seitenschneider und/oder weitere benötigte Komponenten. Der Erntevorsatz ist vorzugsweise an der Frontseite einer Erntemaschine, insbesondere eines Mähdreschers, montierbar oder montiert. Er kann einen Maisadapter umfassen, wie er insbesondere bei einem Maishäcksler verwendet wird.

Ein Erntevorsatz nach dem Oberbegriff des Anspruchs 1 ist aus der EP 1 820 385 A1 bekannt.

Aufgabe der Erfindung ist es, einen verbesserten Erntevorsatz der eingangs angegebenen Art vorzuschlagen.

Erfindungsgemäß wird diese Aufgabe durch die Merkmale des Anspruchs 1 gelöst. Die Rückwand umfaßt ein Mittelteil und zwei Außenteile. Das Mittelteil der Rückwand ist aus Stahl hergestellt, vorzugsweise aus einem hochfesten Stahl. Erfindungsgemäß ist vorgesehen, daß die Außenteile der Rückwand und/oder die Bodenwand als Strangguß-Profil ausgebildet sind, vorzugsweise als Leichtmetall-Strangguß-Profil, insbesondere aus Aluminium und aus einem Material, das Aluminium enthält.

Durch die Erfindung wird ein Erntevorsatz geschaffen, der sowohl aus einem hochfesten Werkstoff, insbesondere Stahl, und einem Werkstoff mit geringerer Festigkeit hergestellt ist, insbesondere Aluminium. In den besonders hochbelasteten Teilen des Erntevorsatzes wird ein hochfester Werkstoff verwendet. Hierdurch können das Gewicht des Erntevorsatzes reduziert und/oder die Länge des Erntevorsatzes erhöht werden. Ferner können die Herstellungskosten des Erntevorsatzes reduziert werden.

Weitere vorteilhafte Weiterbildungen sind in den Unteransprüchen beschrieben.

Vorteilhaft ist es, wenn das Mittelteil ein Oberteil und zwei Seitenteile umfaßt, die miteinander verbunden sind. Das Oberteil und die zwei Seitenteile werden zunächst separat hergestellt und anschließend miteinander verbunden. Sie begrenzen, zusammen mit der Bodenwand, eine Durchgangsöffnung, die zur Montage des Rahmens an dem Erntefahrzeug dienen kann.

Das Mittelteil kann zwei Unterteile umfassen, die jeweils mit einem Außenteil verbunden sind. Die Unterteile können mit jeweils einem Seitenteil verbunden sein, vorzugsweise im unteren Bereich des Seitenteils, und/oder mit dem Oberteil, insbesondere mit nach unten weisenden Verlängerungen des Oberteils.

Nach einer weiteren vorteilhaften Weiterbildung sind das Oberteil und/oder die Seitenteile und/oder die Unterteile miteinander verschweißt und/oder verschraubt.

Eine bevorzugte Ausführungsform ist dadurch gekennzeichnet, daß das Oberteil als Hydroformteil ausgebildet ist und daß die Seitenteile als Biege-Stanz-Teile ausgebildet sind.

Vorteilhaft ist es, wenn die Unterteile als Biege-Stanz-Teile oder als Gußteile ausgebildet sind.

Das Oberteil kann nach unten weisende Verlängerungen aufweisen, die mit den Seitenteilen verschweißt sind. Die nach unten weisenden Verlängerungen sind vorzugsweise als Biege-Stanz-Teile ausgebildet.

Eine weitere vorteilhafte Ausführungsform ist dadurch gekennzeichnet, daß das Oberteil als gebogenes Rohr, vorzugsweise als Vierkantrohr ausgebildet ist und daß die Seitenteile als Biege-Stanz-Teile ausgebildet sind.

Vorteilhaft ist es, wenn das Oberteil zwei Teile umfaßt, die mittels Winkelteilen miteinander verbunden sind. Die Winkelteile sind vorzugsweise als Biege-Stanz-Teile ausgebildet.

Vorteilhaft ist es, wenn die Seitenteile jeweils zwei Seitenbleche umfassen, die miteinander verschweißt sind.

Die Seitenteile können mit den Außenteilen verschraubt sein.

Vorteilhaft ist es, wenn die Bodenwand und die Außenteile im Bereich ihrer inneren unteren Enden mit einer Eckenverstärkung verbunden, vorzugsweise verschweißt sind. Bei der Eckenverstärkung handelt es sich vorzugsweise um ein Eckenverstärkungsprofil.

Eine weitere vorteilhafte Weiterbildung ist dadurch gekennzeichnet, daß die Außenteile eine Strangguß-Profil-Rückwand aufweisen, deren Außenwände durch Verstrebungswände miteinander verbunden sind, die schräg zu den Außenwänden verlaufen. Verstrebungswände, die senkrecht zu den Außenwänden verlaufen, sind nicht vorhanden. Hierdurch unterscheidet sich diese Ausführungsform von der Strangguß-Profil-Rückwand nach der DE 10 2010 052 816 A1.

Ausführungsbeispiele der Erfindung werden nachstehend anhand der beigefügten Zeichnung im einzelnen erläutert. In der Zeichnung zeigt
- Fig. 1: einen Erntevorsatz in einer perspektivischen Ansicht von vorne,

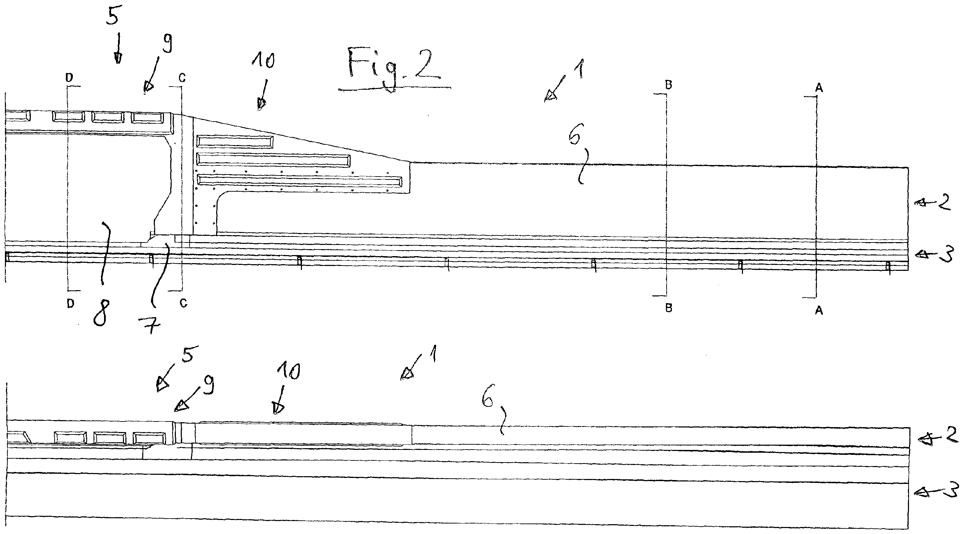

- Fig. 2: die in Fahrtrichtung der Erntemaschine linke Seite des Erntevorsatzes gemäß Fig. 1 in einer Ansicht von vorne und in einer Ansicht von oben,
- Fig. 3: einen Schnitt längs der Linie A-A in Fig. 2,
- Fig. 4: einen weiteren Erntevorsatz in einer perspektivischen Ansicht von vorne,
- Fig. 5: die in Fahrtrichtung der Erntemaschine linke Seite des Erntevorsatzes gemäß Fig. 4 in einer Ansicht von vorne und in einer Ansicht von oben,
- Fig. 6: einen Schnitt längs der Linie A-A in Fig. 5,
- Fig. 7: eine erste Ausführungsform eines Mittelteils einer Rückwand eines Erntevorsatzes im zusammengesetzten Zustand in einer perspektivischen Ansicht,
- Fig. 8: die Bestandteile des Mittelteils gemäß Fig. 7 in perspektivischen Ansichten,
- Fig. 9: eine erste Variante des Mittelteils gemäß Fig. 7 und 8 in einer Ansicht von vorne und in einem Schnitt längs der Linie A-A dieser Ansicht,
- Fig. 10: eine zweite Variante des Mittelteils gemäß Fig. 7 und 8 in einer Ansicht von vorne und in einem Schnitt längs der Linie A-A in dieser Ansicht,
- Fig. 11: eine dritte Variante des Mittelteils gemäß Fig. 7 und 8 in einer Ansicht von vorne und in einem Schnitt längs der Linie A-A in dieser Ansicht,
- Fig. 12: eine zweite Ausführungsform eines Mittelteils einer Rückwand eines Erntevorsatzes im zusammengesetzten Zustand in einer perspektivischen Ansicht,
- Fig. 13: die Bestandteile des Mittelteils gemäß Fig. 12 in perspektivischen Ansichten,
- Fig. 14: das Mittelteil gemäß Fig. 12 und 13 in einer Ansicht von vorne und in einem Schnitt längs der Linie A-A in dieser Ansicht,
- Fig. 15: einen Teil des Mittelteils gemäß Fig. 12 bis 14 vor der Montage in einer perspektivischen Ansicht,
- Fig. 16: den Teil des Mittelteils gemäß Fig. 15 nach der Montage in einer perspektivischen Ansicht,
- Fig. 17: die Außenteile der Rückwand und die Bodenwand eines Erntevorsatzes in einer perspektivischen Darstellung von vorne oben,
- Fig. 18: den Gegenstand der Fig. 17 in einer perspektivischen Ansicht von hinten unten,
- Fig. 19: einen Außenteil einer Strangguß-Profil-Rückwand in einem Querschnitt und
- Fig. 20: eine vorbekannte Strangguß-Profil-Rückwand in einem Querschnitt.

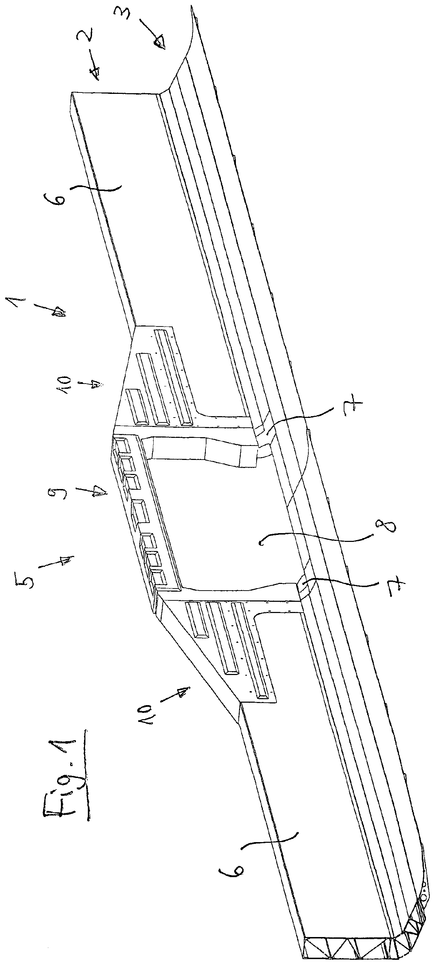

Der in Fig. 1 gezeigte Erntevorsatz für eine Erntemaschine, insbesondere für einen Mähdrescher, ist besonders für die Verarbeitung von Getreide geeignet. Er umfaßt einen Rahmen 1, der eine Rückwand 2 und eine Bodenwand 3 aufweist. Der Rahmen 1 weist eine L-förmige Winkelform auf. Die Rückwand 2 verläuft im wesentlichen in vertikaler Richtung, und die Bodenwand 3 verläuft im wesentlichen in horizontaler Richtung. Die Längserstreckung des Rahmens 1 entspricht der Arbeitsbreite. Der Rahmen 1 weist an seinen Enden Seitenwände auf (in der Zeichnung nicht dargestellt).

Die Rückwand 2 umfaßt ein Mittelteil 5 und zwei Außenteile 6. Das Mittelteil 5 der Rückwand 2 ist aus einem hochfesten Werkstoff hergestellt, nämlich aus Stahl. Die Außenteile 6 und die Bodenwand 3 sind als Strangguß-Profil ausgebildet. Es handelt sich um ein Leichtmetall-Strangguß-Profil aus Aluminium oder aus einem Werkstoff, der Aluminium enthält. Das Mittelteil 5, die Außenteile 6 und die Bodenwand 3 sind miteinander verbunden.

In der Mitte der Rückwand 2 ist ferner eine Durchgangsöffnung 8 vorgesehen, die von dem Mittelteil 5 und der Bodenwand 3 begrenzt ist. Die Durchgangsöffnung 8 kann zur Montage des Rahmens 1 an dem Erntefahrzeug dienen. Ferner kann das Erntegut durch die Durchgangsöffnung 8 von der Vorderseite des Rahmens 1 zum Erntefahrzeug gefördert werden. Zur Förderung des Ernteguts kann in dem Rahmen 1 eine Einzugsschnecke vorhanden sein (in der Zeichnung nicht dargestellt).

Das Mittelteil 5 umfaßt ein Oberteil 9 und zwei Seitenteile 10. Das Oberteil 9 ist mit jedem Seitenteil 10 verbunden. Das Oberteil 9 verläuft im wesentlichen horizontal. Jedes Seiteteil 10 liegt zwischen dem Oberteil 9 einerseits und einem Außenteil 6 und der Bodenwand 3 andererseits.

Das Mittelteil 5 umfaßt ferner zwei Unterteile 7, die jeweils mit einem Außenteil 6 verbunden sind. Die Unterteile 7 sind ferner mit der Bodenwand 3 verbunden.

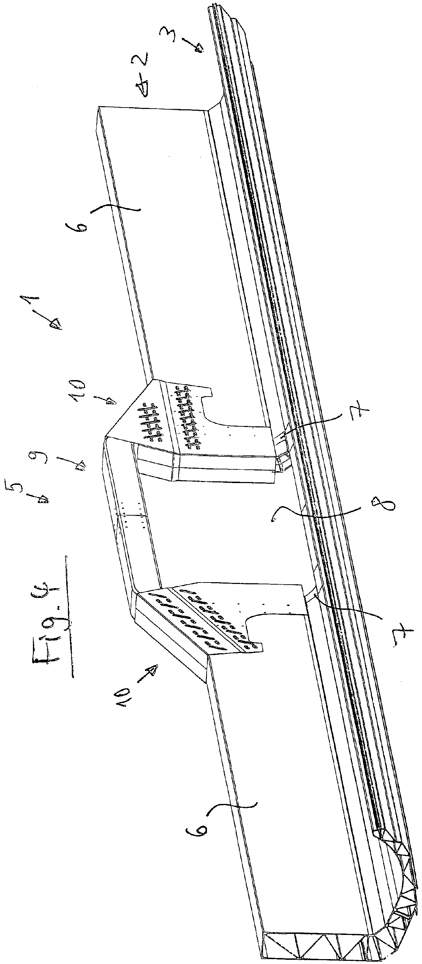

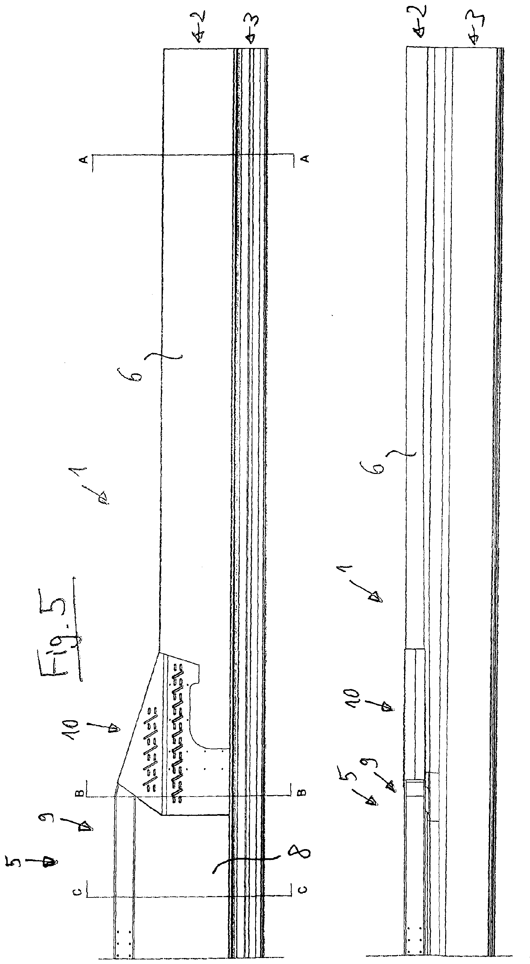

In Fig. 4 bis 6 ist eine andere Ausführungsform eines Rahmens 1 gezeigt, bei dem entsprechende Bauteile mit denselben Bezugszeichen versehen sind und nicht erneut beschrieben werden. Der Erntevorsatz gemäß Fig. 4 bis 6 ist besonders für die Verarbeitung von Mais geeignet.

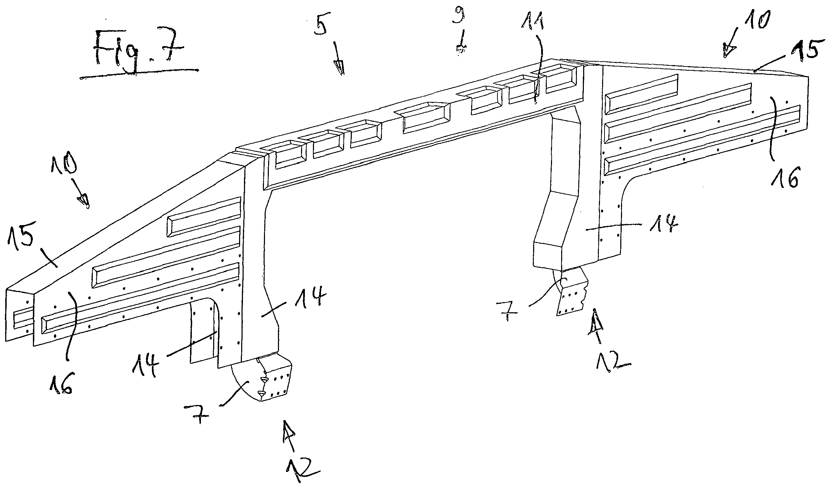

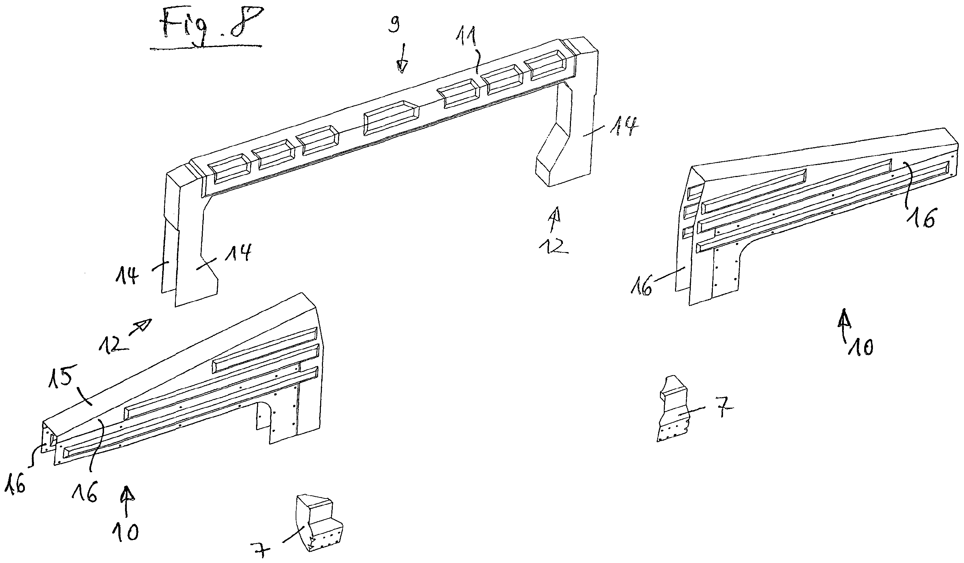

Die Fig. 7 bis 11 zeigen eine erste Ausführungsform eines Mittelteils 5 einer Rückwand 2 eines Erntevorsatzes. Das Oberteil 9 ist als Hydroformteil mit einem horizontalen Teil 11 und zwei nach unten weisenden Verlängerungen 12 ausgebildet. Die Seitenteile 10 sind als Biege-Stanz-Teile ausgebildet. Die Unterteile 7 sind ebenfalls als Biege-Stanz-Teile ausgebildet. Sie können allerdings auch als Gußteile ausgebildet sein, was insbesondere bei einer Serienfertigung von Vorteil sein kann.

Die nach unten weisenden Verlängerungen 12 des Oberteils 9 sind mit jeweils einem Seitenteil 10 und mit jeweils einem Außenteil 6 verschweißt. Jede Verlängerung 12 umfaßt zwei nach unten weisende Seitenflächen 14.

Jedes Seitenteil 10 ist U-förmig ausgestaltet. Die Basisfläche 15 verläuft geneigt. Sie verläuft zum Oberteil 9 hin ansteigend. Die Seitenflächen 16 verlaufen von der Basisfläche 15 nach unten. Die Seitenflächen 14 der Verlängerung 12 und die Seitenflächen 16 des Seitenteils 10 überlappen einander. Dabei liegen die Seitenflächen 16 des Seitenteils 10 außen und die Seitenflächen 14 der Verlängerung 12 innen.

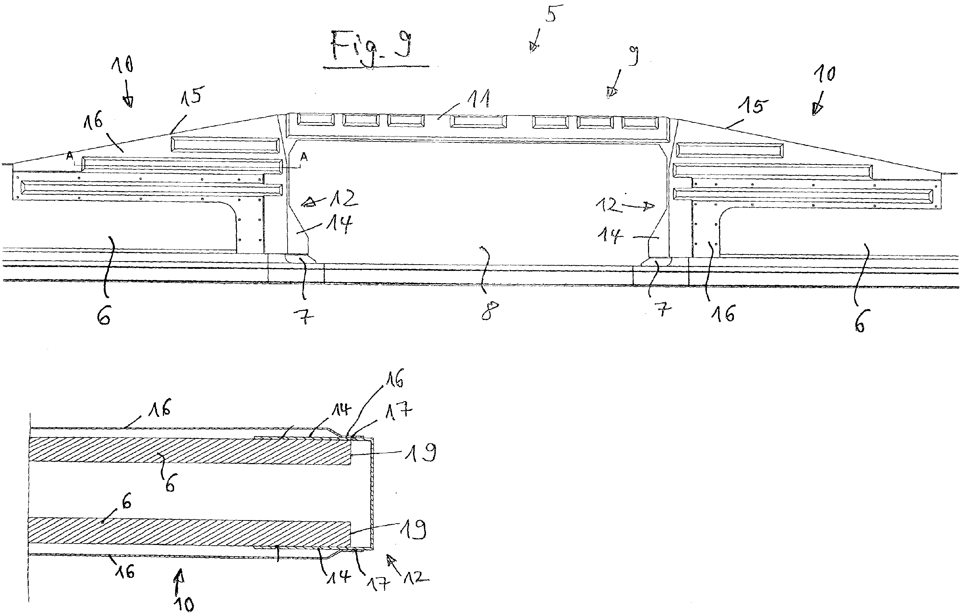

In der Schnittdarstellung der Fig. 9 ist eine erste Variante der Verbindung gezeigt. Hier ist die Außenseite der Seitenfläche 14 der Verlängerung 12 mit der Innenseite der Seitenfläche 16 des Seitenteils 10 durch eine Schweißnaht 17 verbunden. Die Schweißnaht 17 liegt im Bereich des Endes 19 des Außenteils 6. Die Seitenfläche 14 liegt an der Außenseite des Außenteils 6 an. Am Ende der Schweißnaht 17 ist die Seitenfläche 16 des Seitenteils 10 nach außen abgekröpft.

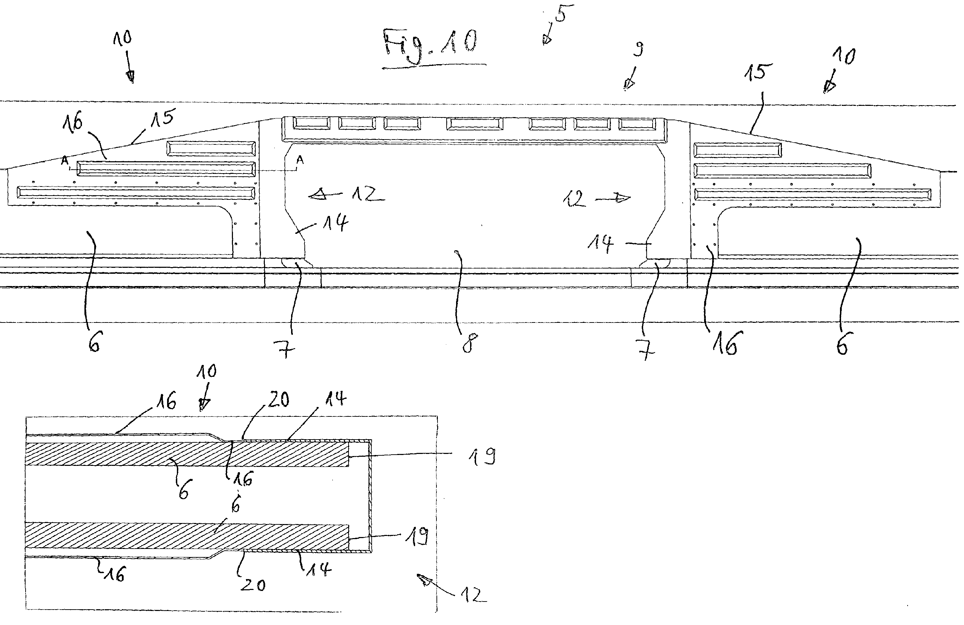

In Fig. 10 ist eine zweite Variante der Verbindung dargestellt. Hier liegt die Innenseite der Seitenfläche 14 der Verlängerung 12 an der Außenseite des Außenteils 6 an. Die Innenseite der Seitenfläche 16 des Seitenteils 10 liegt ebenfalls an der Außenseite des Außenteils 6 an. Die Seitenfläche 14 übergreift das Ende 19 des Außenteils 6. An das Ende der Seitenfläche 14 schließt sich der Anfang der Seitenfläche 16 auf Stoß an. Das Ende der Seitenfläche 14 und der Anfang der Seitenfläche 16 sind durch eine V-Schweißnaht 20 miteinander verbunden. Die Seitenfläche 16 ist nach außen abgekröpft.

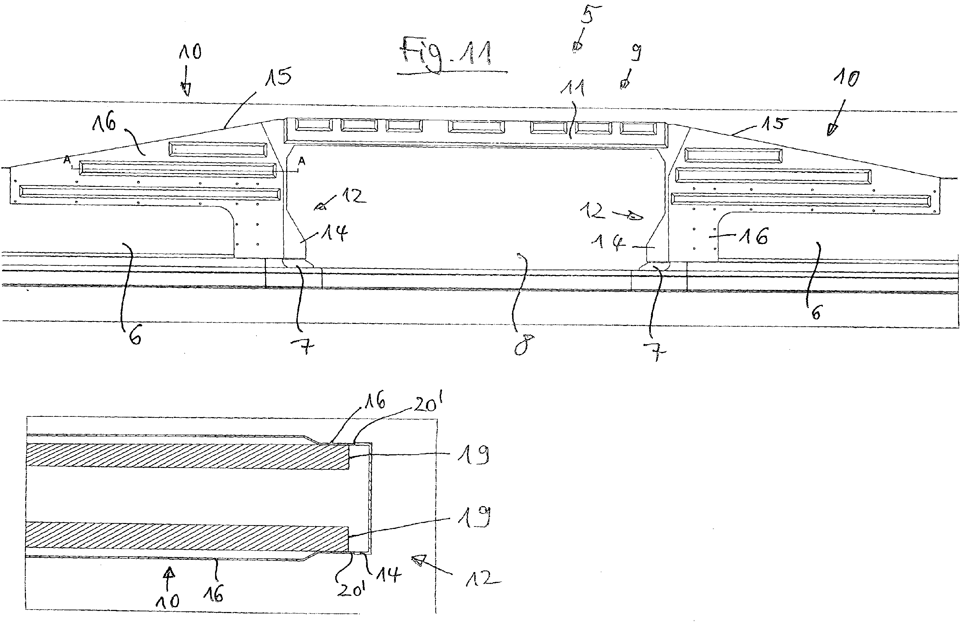

Fig. 11 zeigt eine dritte Variante der Verbindung. Hier befindet sich die V-Schweißnaht 20', die die Seitenfläche 14 mit der Seitenfläche 16 verbindet, außerhalb des Bereichs des Außenteils 6.

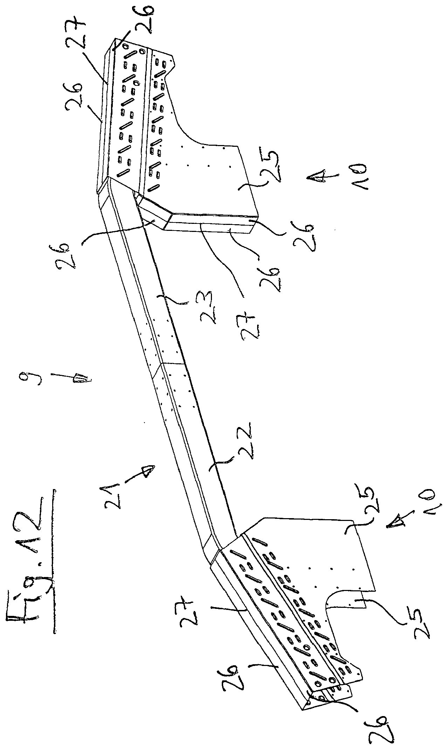

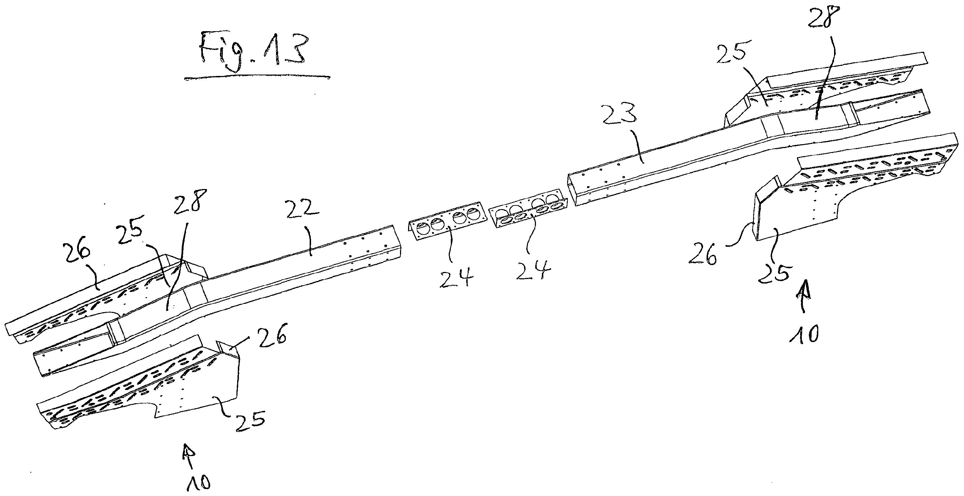

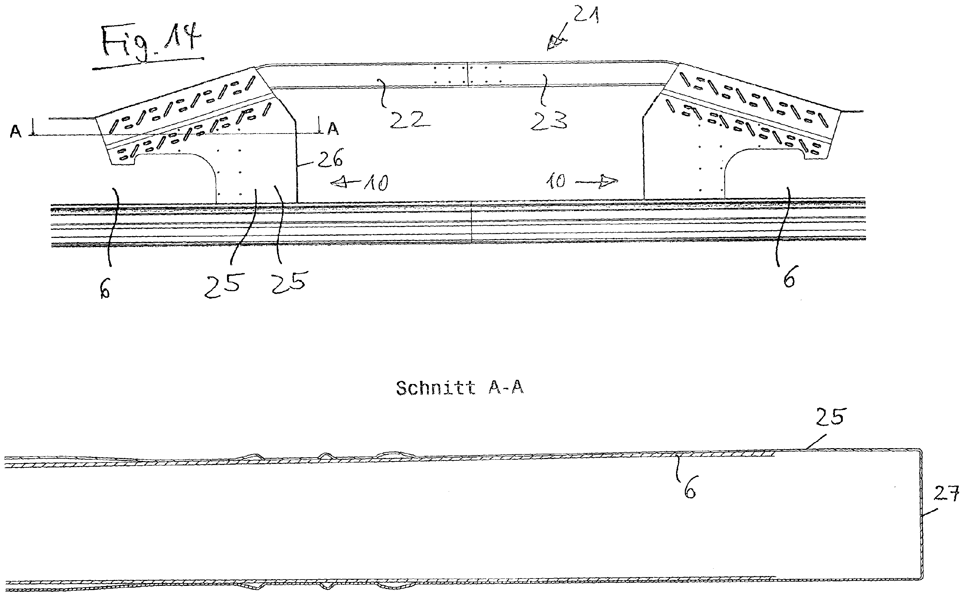

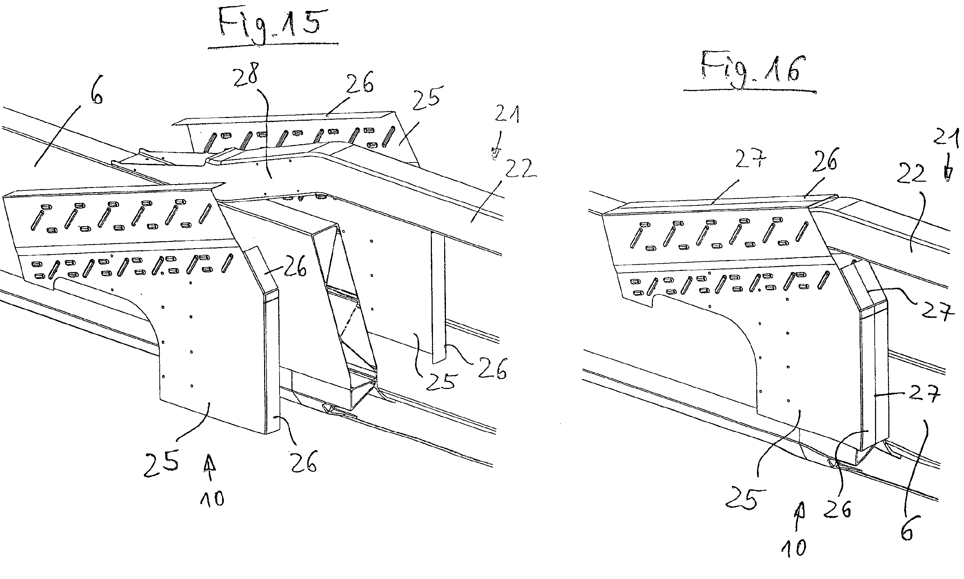

In Fig. 12 bis 16 ist eine zweite Ausführungsform eines Mittelteils 5 einer Rückwand eines Erntevorsatzes gezeigt, bei der Bestandteile, die mit der ersten Ausführungsform übereinstimmen, mit denselben Bezugzeichen versehen sind und nicht erneut beschrieben werden. Hier ist das Oberteil 9 als gebogenes Vierkantrohr 21 ausgebildet. Die Seitenteile 10 sind als Biege-Stanz-Teile ausgebildet.

Das gebogene Vierkantrohr 21 umfaßt ein erstes Teil 22 und ein zweites Teil 23, die mittels Winkelteilen 24 miteinander verbunden sind. Die Winkelteile 24 sind als L-Profilteile ausgebildet. Sie liegen an den Innenwänden der Teile 22, 23 des Vierkantrohrs 21 an und sind mit diesen Teilen 22, 23 verschraubt.

Die Seitenteile 10 umfassen jeweils zwei Seitenbleche 25, die miteinander verschweißt sind. Jedes Seitenblech 25 weist Laschen 26 auf, die im rechten Winkel zur Hauptfläche des Seitenblechs 25 verlaufen. Die Laschen 26 der Seitenbleche 25 eines Seitenteils 10 liegen auf Stoß aneinander an. Sie sind längs der Kanten, an denen sie aneinander anliegen, miteinander verschweißt. Die Schweißnähte 27 können als V-Nähte ausgebildet sein.

Die Seitenbleche 25 sind mit dem Oberteil 9 und jeweils einem Außenteil 6 verschraubt. Beim Zusammenbau werden die Seitenbleche 25 zunächst mit dem Oberteil 9 und den Außenteilen 6 verschraubt und anschließend miteinander verschweißt.

Das Vierkantrohr 21 weist Abwinkelungen 28 auf, die vorzugsweise in einem Winkel von 10 bis 30° gegenüber der Horizontalen verlaufen. Die Enden der Abwinkelungen 28 sind mit den oberen Endflächen der Außenteile 6 verbunden, nämlich verschraubt.

Durch die Laschen 26 der Seitenbleche 25, die an ihren Endkanten durch die Schweißnaht 27 verbunden sind, wird die innere Endfläche des Außenteils 6 vollständig abgedeckt, so daß das Aluminiumprofil der Außenteile gegen Oberflächenbeschädigung und Korrosionsgefahr geschützt ist.

Die Seitenteile 25 sind mit den Außenteilen 6 verschraubt.

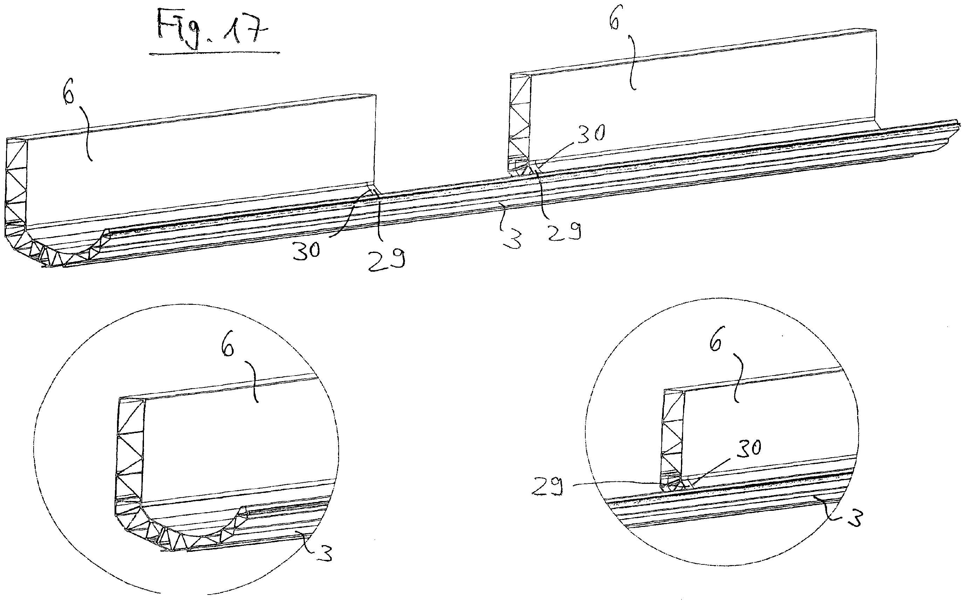

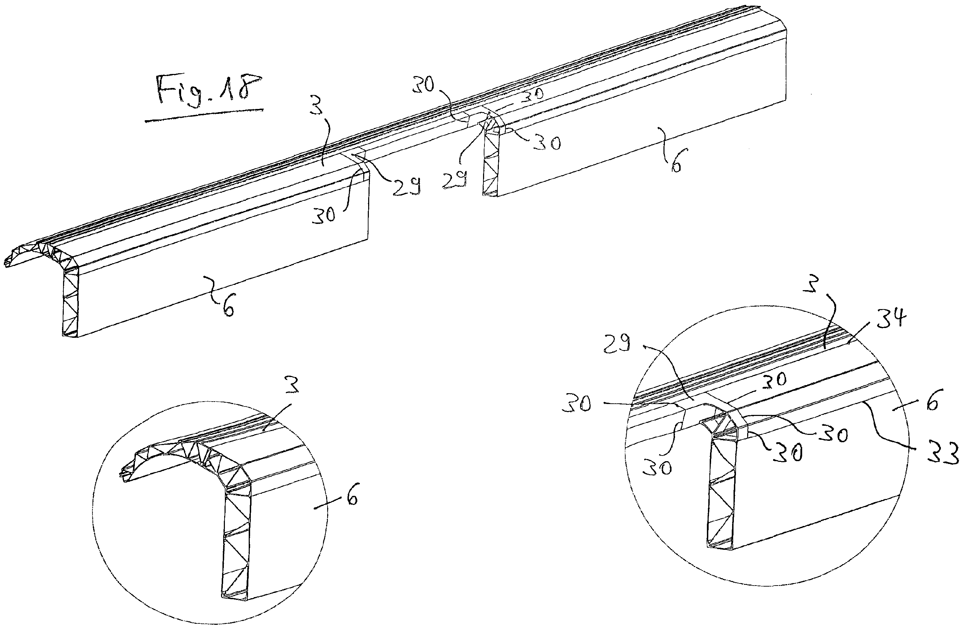

Wie aus Fig. 17 und 18 ersichtlich sind die Bodenwand 3 und die Außenteile 6 im Bereich ihrer inneren unteren Enden mit einer Eckenverstärkung 29 verbunden. Die Eckenverstärkung 29 ist als Eckenverstärkungsprofil ausgestaltet. Sie ist durch eine Schweißnaht 30 mit der Bodenwand 3 und einem Außenteil 6 verbunden.

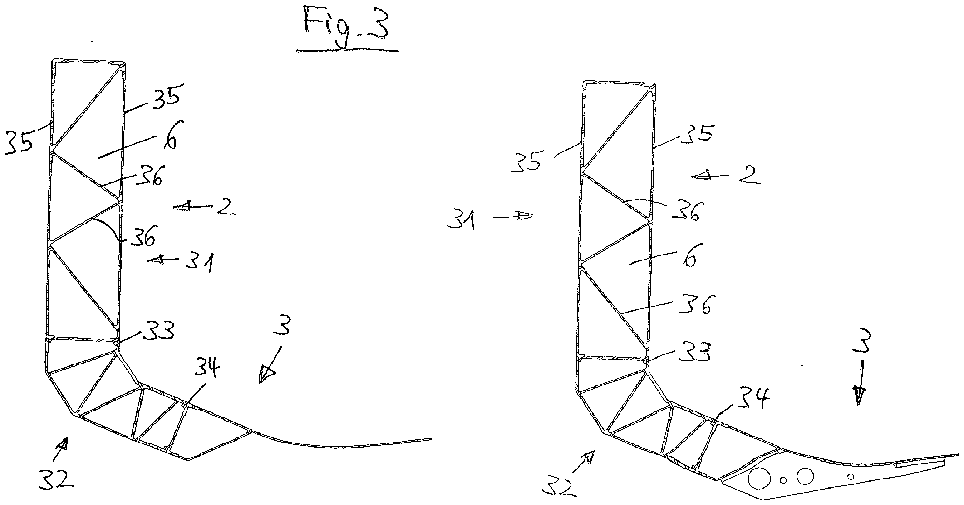

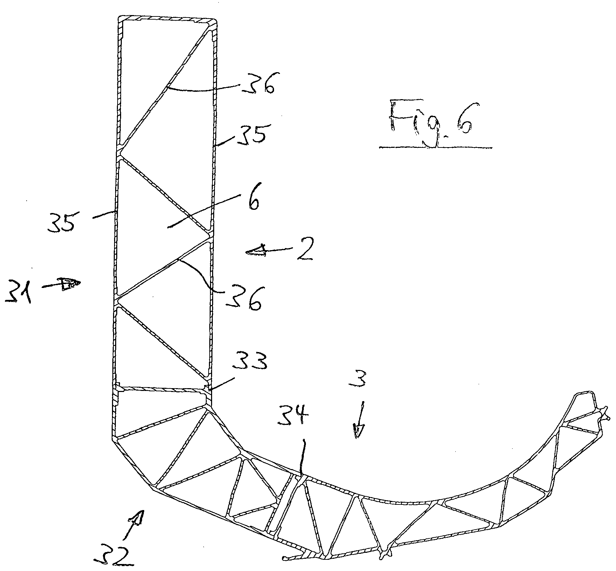

Die Außenteile 6 sind, wie aus Fig. 17 bis 20 sowie aus Fig. 3 und 6 ersichtlich, als Leichtmetall-Strangguß-Profil ausgebildet. Jedes Außenteil 6 umfaßt eine Rückwand 31 und eine gekrümmte Verbindungswand 32. Die Rückwand 31 ist mit der gekrümmten Verbindungswand 32 durch eine Schweißnaht 33 verbunden. Die gekrümmte Verbindungswand 32 ist mit der Bodenwand 3 durch eine Schweißnaht 34 verbunden. Durch die gekrümmte Verbindungswand 32 sind die Rückwand 31 und die Bodenwand 3 miteinander verbunden.

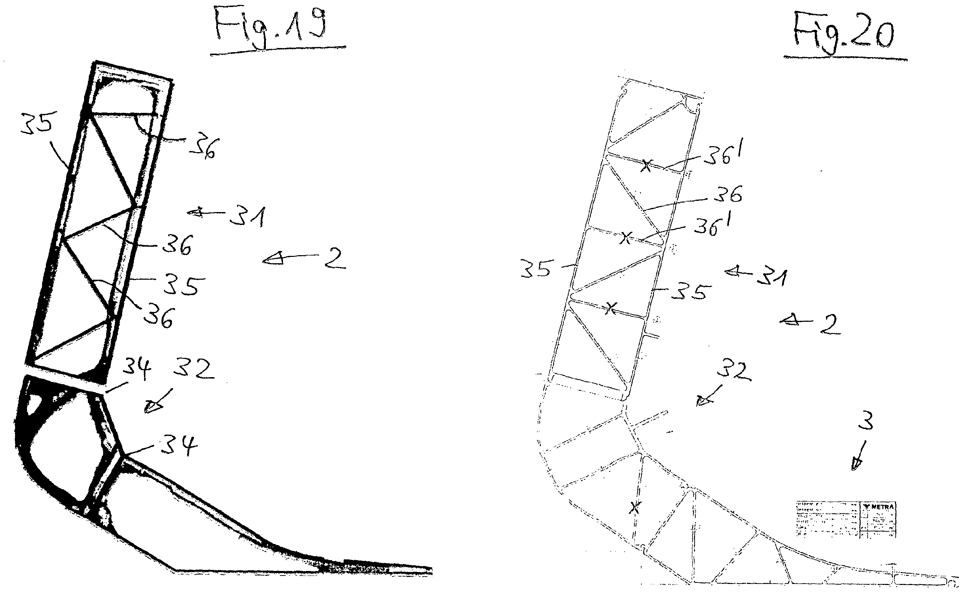

Die Rückwand 31 umfaßt zwei Außenwände 35, die parallel zueinander und im Abstand voneinander verlaufen. Sie sind durch Verstrebungswände 36 miteinander verbunden, die schräg zu den Außenwänden 35 verlaufen. Im Gegensatz zu der vorbekannten Ausführungsform nach der DE 10 2010 052 816 A1, die in Fig. 20 dargestellt ist, sind bei der Ausführungsform nach Fig. 19 keine Verstrebungswände 36' vorhanden, die senkrecht zu den Außenwänden 35 verlaufen.

Die Verstrebungswände 36 bilden eine Zick-Zack-Linie.

Sämtliche Schweißnähte können als Laser-Schweißnähte ausgebildet sein.

## Patentansprüche

1. Erntevorsatz für eine Erntemaschine mit einem Rahmen (1), der eine Rückwand (2) und eine Bodenwand (3) umfasst, wobei die Rückwand (2) ein Mittelteil (5) und zwei Außenteile (6) umfasst und wobei das Mittelteil (5) der Rückwand (2) aus Stahl hergestellt ist,
**dadurch gekennzeichnet,**
**dass** die Außenteile (6) der Rückwand (2) und/oder die Bodenwand (3) als Strangguss-Profil ausgebildet sind.

2. Erntevorsatz nach Anspruch 1, **dadurch gekennzeichnet, dass** das Mittelteil (5) der Rückwand (2) aus einem hochfesten Stahl hergestellt ist.

3. Erntevorsatz nach Anspruch 1 oder 2, **dadurch gekennzeichnet, dass** die Außenteile (6) der Rückwand (2) und/oder die Bodenwand (3) als Leichtmetall-Strangguss-Profil ausgebildet sind, insbesondere aus Aluminium oder aus einem Material, das Aluminium enthält.

4. Erntevorsatz nach einem der vorhergehenden Ansprüche, **dadurch gekennzeichnet, dass** das Mittelteil (5) ein Oberteil (9) und zwei Seitenteile (10) umfasst, die miteinander verbunden sind.

5. Erntevorsatz nach einem der vorhergehenden Ansprüche, **dadurch gekennzeichnet, dass** das Mittelteil (5) zwei Unterteile (7) umfasst, die jeweils mit einem Außenteil (6) verbunden sind.

6. Erntevorsatz nach Anspruch 4 oder 5, **dadurch gekennzeichnet, dass** das Oberteil (9) und/oder die Seitenteile (10) und/oder die Unterteile (7) miteinander verschweißt und/oder verschraubt sind.

7. Erntevorsatz nach einem der Ansprüche 4 bis 6, **dadurch gekennzeichnet, dass** das Oberteil (9) als Hydroformteil (11, 12) ausgebildet und dass die Seitenteile (10) als Biege-Stanz-Teile ausgebildet sind.

8. Erntevorsatz nach einem der Ansprüche 5 bis 7, **dadurch gekennzeichnet, dass** die Unterteile (7) als Biege-Stanz-Teile oder als Fußteile ausgebildet sind.

9. Erntevorsatz nach einem der Ansprüche 4 bis 8, **dadurch gekennzeichnet, dass** das Oberteil (9) nach unten weisende Verlängerungen (12) aufweist, die mit den Seitenteilen (10) verschweißt sind.

10. Erntevorsatz nach einem der Ansprüche 4 bis 9, **dadurch gekennzeichnet, dass** das Oberteil (9) als gebogenes Rohr (21) ausgebildet ist und dass die Seitenteile (10) als Biege-Stanz-Teile ausgebildet sind.

11. Erntevorsatz nach einem der Ansprüche 4 bis 10, **dadurch gekennzeichnet, dass** das Oberteil (9) zwei Teile (22, 23) umfasst, die mittels Winkelteilen (24) miteinander verbunden sind.

12. Erntevorsatz nach einem der Ansprüche 4 bis 11, **dadurch gekennzeichnet, dass** die Seitenteile (10) jeweils zwei Seitenbleche (25) umfassen, die miteinander verschweißt (27) sind.

13. Erntevorsatz nach einem der Ansprüche 4 bis 12, **dadurch gekennzeichnet, dass** die Seitenteile(10) mit den Außenteilen (6) verschraubt sind.

14. Erntevorsatz nach einem der vorhergehenden Ansprüche, **dadurch gekennzeichnet, dass** die Bodenwand (3) und die Außenteile (6) im Bereich ihrer inneren unteren Enden mit einer Eckenverstärkung (29), vorzugsweise mit einem Eckenverstärkungsprofil, verbunden, vorzugsweise verschweißt sind.

15. Erntevorsatz nach einem der vorhergehenden Ansprüche, **dadurch gekennzeichnet, dass** die Außenteile (6) eine Strangguss-Profil-Rückwand (31) aufweisen, deren Außenwände (35) durch Verstrebungswände (36) miteinander verbunden sind, die schräg zu den Außenwänden verlaufen.

## Claims

1. A harvesting attachment for a harvester having a frame (1) which includes a rear wall (2) and a bottom wall, wherein the rear wall (2) comprises a central portion (5) and two outer portions (6), and the central portion (5) of the rear wall (2) is made of steel.
**characterized in that** outer portions (6) of the rear wall (2) and/or the bottom wall (3) are formed as an extrusion profile.

2. A harvesting attachment according to claim 1, **characterized in that** the central portion (5) of the rear wall (2) is made of high-tensile steel.

3. A harvesting attachment according to claim 1 or 2, **characterized in that** the outer portions (6) of the rear wall (2) and/or the bottom wall (3) are formed as an extrusion profile, preferably as a light-metal extrusion profile, in particular made of aluminum or a material that contains aluminum.

4. A harvesting attachment according to any of the previous claims, **characterized in that** the central portion (5) comprises a top part (9) and two side parts (10) that are connected to one another.

5. A harvesting attachment according to any of the previous claims, **characterized in that** the central portion (5) comprises two lower parts (7) that are each connected to one outer portion (6).

6. A harvesting attachment according to claim 4 or 5, **characterized in that** the top part (9) and/or the side parts (10) and/or the lower parts (7) are welded together and/or bolted together.

7. A harvesting attachment according to any of the claims 4 to 6, **characterized in that** the top part (9) is formed as a hydroformed component (11, 12) and **in that** the side parts (10) are formed as bent and stamped components.

8. A harvesting attachment according to any of the claims 5 to 7, **characterized in that** the lower parts (7) are formed as bent and stamped components or cast components.

9. A harvesting attachment according to any of the claims 4 to 8, **characterized in that** the top part (9) has downwardly pointing extensions (12) that are welded to the side parts (10).

10. A harvesting attachment according to any of the claims 4 to 9, **characterized in that** the top part (9) is formed as a bent tube (21) and **in that** the side parts (10) are formed as bent and stamped components.

11. A harvesting attachment according to any of the claims 4 to 10, **characterized in that** the top part (9) comprises two parts (22, 23), which are connected to one another by means of angle parts (24).

12. A harvesting attachment according to any of the claims 4 to 11, **characterized in that** the side parts (10) each comprise two side plates (25) that are welded (27) together.

13. A harvesting attachment according to any of the claims 4 to 12, **characterized in that** the side parts (10) are bolted together with the outer portions (6).

14. A harvesting attachment according to any of the previous claims, **characterized in that** the bottom wall (3) and the outer portions (6) are connected, preferably welded together, in the area of their inner lower ends using a corner reinforcement (29), preferably using a corner reinforcement profile.

15. A harvesting attachment according to any of the previous claims, **characterized in that** the outer portions (6) have an extrusion profile rear wall (31) whose outer walls (35) are connected to one another by means of bracing walls (36) which extend obliquely to the outer walls.

## Revendications

1. Tête de récolte pour une machine de récolte comportant une ossature (1), qui comprend une paroi arrière (2) et une paroi de plancher (3), la paroi arrière (2) comprenant une pièce centrale (5) et deux pièces extérieures (6) et la pièce centrale (5) de la paroi arrière (2) étant constituée d'acier,
**caractérisée en ce que**
les pièces extérieures (6) de la paroi arrière (2) et/ou la paroi de plancher (3) sont construites sous forme d'un profilé par coulée continue.

2. Tête de récolte selon la revendication 1, **caractérisée en ce que** la pièce centrale (5) de la paroi arrière (2) est constituée d'acier de haute résistance.

3. Tête de récolte selon la revendication 1 ou 2, **caractérisée en ce que** les pièces extérieures (6) de la paroi arrière (2) et/ou la paroi de plancher (3) sont construites sous forme d'un profilé par coulée continue de métal léger, notamment d'aluminium ou d'un matériau qui contient de l'aluminium.

4. Tête de récolte selon l'une quelconque des revendications précédentes, **caractérisée en ce que** la pièce centrale (5) comprend une pièce supérieure (9) et deux pièces latérales (10), qui sont reliées l'une à l'autre.

5. Tête de récolte selon l'une quelconque des revendications précédentes, **caractérisée en ce que** la pièce centrale (5) comprend deux pièces inférieures (7), qui sont reliées chacune à une pièce extérieure (6).

6. Tête de récolte selon la revendication 4 ou 5, **caractérisée en ce que** la pièce supérieure (9) et/ou les pièces latérales (10) et/ou les pièces inférieures (7) sont soudées et/ou vissées l'une à l'autre.

7. Tête de récolte selon l'une quelconque des revendications 4 à 6, **caractérisée en ce que** la pièce supérieure (9) est construite sous forme d'une pièce hydroformée (11, 12) et **en ce que** les pièces latérales (10) sont construites sous forme de pièces fabriquées par pliage-estampage.

8. Tête de récolte selon l'une quelconque des revendications 5 à 7, **caractérisée en ce que** les pièces inférieures (7) sont construites sous forme de pièces fabriquées par pliage-estampage ou sous forme de pièces d'embase.

9. Tête de récolte selon l'une quelconque des revendications 4 à 8, **caractérisée en ce que** la pièce supérieure (9) comprend des prolongements orientés vers le bas (12), qui sont soudés aux pièces latérales (10).

10. Tête de récolte selon l'une quelconque des revendications 4 à 9, **caractérisée en ce que** la pièce supérieure (9) est construite sous forme d'un tube plié (21) et **en ce que** les pièces latérales (10) sont construites sous forme de pièces fabriquées par pliage-estampage.

11. Tête de récolte selon l'une quelconque des revendications 4 à 10, **caractérisée en ce que** la pièce supérieure (9) comprend deux parties (22, 23) qui sont reliées ensemble par des pièces en équerre (24).

12. Tête de récolte selon l'une quelconque des revendications 4 à 11, **caractérisée en ce que** les pièces latérales (10) comprennent chacune deux tôles latérales (25) qui sont soudées (27) l'une à l'autre.

13. Tête de récolte selon l'une quelconque des revendications 4 à 12, **caractérisée en ce que** les pièces latérales (10) sont vissées aux pièces extérieures (6).

14. Tête de récolte selon l'une quelconque des revendications précédentes, **caractérisée en ce que** la pièce de plancher (3) et les pièces extérieures (6) sont assemblées, de préférence soudées, dans la zone de leurs extrémités inférieures intérieures, à un coin renforcé (29), de préférence à un profilé de coin renforcé.

15. Tête de récolte selon l'une quelconque des revendications précédentes, **caractérisée en ce que** les pièces extérieures (6) comprennent une paroi arrière en profilé par coulée continue (31), dont les parois extérieures (35) sont reliées par des entretoises (36), qui sont inclinées par rapport aux parois extérieures.
